# EUROPEAN PATENT SPECIFICATION

(11) **EP 4 274 957 B1**
(45) Date of publication and mention of the grant of the patent: **19.02.2025**
(21) Application number: 22700302.7
(22) Date of filing: 05.01.2022
(51) Int. Cl.: F02M 51/00, F02M 61/16

(54) **FUEL INJECTOR**
KRAFTSTOFFEINSPRITZVENTIL
INJECTEUR DE CARBURANT

(30) Priority: 07.01.2021 GB 202100204
(43) Date of publication of application: 15.11.2023
(73) Proprietor: PHINIA Delphi Luxembourg SARL, 4367 Belvaux (LU)
(72) Inventor: BREEDIJK, Cas, 57330 Kanfen (FR)
(74) Representative: Office Freylinger
(86) International application number: PCT/EP2022/050161
(87) International publication number: WO 2022/148786

(56) References cited:
- EP-A1- 3 301 293
- US-A1- 2013 186 986
- US-A1- 2019 032 617
- US-A1- 2019 315 029

## Description

### TECHNICAL FIELD

The invention relates to a fuel injector, to a solenoid assembly for a fuel injector and to a method for manufacturing a fuel injector.

### BACKGROUND ART

Fuel injectors are used in combustion engines to inject fuel e.g. into a runner of an air intake manifold ahead of a cylinder intake valve or directly into the combustion chamber of an engine cylinder. According to one known design, the injector comprises an injector body, which has an internal channel for guiding fuel from a proximal side to a nozzle at a distal side and which contains the movable parts of the injector, like a pintle for closing the nozzle and an armature for actuating the pintle, as for example disclosed in EP3301293A1.
Also, the injector body commonly comprises at least one spring for biasing the pintle and/or the armature towards one position, normally corresponding to a closed state of the nozzle. The armature is actuated by a magnetic field that is generated by a magnetic coil or solenoid that surrounds the injector body and that is enclosed in a solenoid housing. The coil and the solenoid housing are part of a solenoid assembly and are overmolded with plastic material. The solenoid assembly comprises a plastic body that provides electric insulation and mechanical protection for electric components like the coil and a cable connected thereto. Also, the plastic body comprises a cylindrical holder portion with a central aperture in which the injector body (or at least a portion thereof) is received. Distal from the plastic body, the central aperture is defined by a bobbin of the coil and a flux washer that disposed proximally of the bobbin and is used to guide a magnetic flux when the coil is activated. Finally, the plastic body normally comprises a collar surrounding a cavity in which a contact portion of the cable is disposed, thereby providing a socket in which the contact portion is protected.

It is known to produce the solenoid assembly with the plastic body before the injector body is inserted into the central aperture. While most of the shape of the plastic body can be defined by two mold halves of a molding tool that are closed around the solenoid housing, the central aperture and the cavity of the socket, which represent undercut areas with respect to the molding process, need to be defined by additional movable sliders or cores, which are moved forward before the plastic material is molded and which are afterwards retracted to enable removal of the solenoid assembly from the molding tool. Commonly, three cores are needed: one core is introduced from a distal side into central aperture inside the bobbin and the flux washer, a second core is moved from a proximal side into contact with the flux washer to define the proximal part of the central cavity and a third core is used to define the cavity of the socket. The use of these three cores makes the production process complicated and expensive.

Another problem is that the inner radius of the flux washer corresponds to the outer radius of the injector body and the second core is to be moved into sealing contact with the proximal edge of the flux washer, wherefore its outer radius has to be larger than the outer radius of the injector body. Accordingly, the central cavity of the solenoid assembly also has a larger radius than the injector body and cannot provide a form fit with the injector body. Accordingly, additional elements like a support ring and a seal ring have to be introduced into the gap between, which further complicates the production process and creates additional costs.

### TECHNICAL PROBLEM

It is thus an object of the present invention to provide an improved design for the plastic parts of a fuel injector.

This problem is solved by a fuel injector according to claim 1, by a solenoid assembly according to claim 14 and by a method according to claim 15.

### GENERAL DESCRIPTION OF THE INVENTION

The invention provides a fuel injector. More specifically, this is a fuel injector for a combustion engine. The fuel injector extends along an injector axis from a proximal side to a distal side. The terms "distal" as well as "proximal" refer to the general flow direction of the fuel within the injector towards the distal side. In general, the distal side is the side of the injector that faces the engine. At least some parts of the injector can be symmetric with respect to the injector axis, but in general, the injector axis only defines a reference frame, whereby an axial direction, a radial direction and a tangential direction are implicitly defined.

The fuel injector comprises a solenoid unit, which in turn comprises a magnetic coil in a solenoid housing, the solenoid unit circumferentially surrounding a distal aperture around the injector axis. The magnetic coil or solenoid is configured for generating a magnetic field which actuates the movable parts of the injector as will be discussed below. It is normally disposed circumferentially around the injector axis. As a current flows through the magnetic coil, a magnetic field is generated. Although the windings of the magnetic coil are normally individually insulated in order to avoid any short circuit, the magnetic coil as a whole is normally overmolded with plastic material. The coil is normally disposed a bobbin, which of course is disposed radially inside of the coil. The solenoid housing, which is made of metal, usually has a roughly cylindrical portion that surrounds the magnetic coil while being spaced therefrom. The solenoid unit circumferentially surrounds a distal aperture, which may also be referred to as a distal through-hole and which is an axially continuous aperture that traverses the solenoid unit.

The fuel injector further comprises a cable element connected to the magnetic coil. The cable element is of course electrically conductive and is electrically connected to the coil. Accordingly, it is adapted to provide an electrical voltage to the coil and thus generate an electrical current in the coil, which in turn generates the abovementioned magnetic field. In order to provide a closed electric circuit, the cable element normally comprises two separate electric conductors. The term "cable element" is not to be construed in any limiting way in this context. The cable element can be a cable comprising one or several wires, but it could also comprise a different kind of electrical conductor. Each conductor of the cable element may comprise a dedicated insulation like a plastic sheath or an insulating lacquer provided on its surface. As will be explained below, such dedicated insulation is not necessary, though, since the cable element is overmolded by a plastic material.

The fuel injector further comprises a coherent plastic body, which comprises a solenoid portion molded onto the solenoid unit, a cable portion extending proximally from the solenoid portion and molded over the cable element, and a holder portion that is disposed proximally from the solenoid unit and that circumferentially surrounds a proximal aperture around the injector axis. The plastic body is coherent, i.e. it has a coherent form and is made as a single piece. It is made of a plastic material, which in general can be any polymeric material, in particular a thermoplastic material that is suitable for injection molding. Accordingly, the plastic body is normally formed by injection molding. It comprises a solenoid portion that is molded onto the solenoid unit. Normally, the solenoid portion is at least partially disposed inside the solenoid unit or inside the solenoid housing, respectively. In other words, during the molding process, plastic material flows into or is pressed into the solenoid unit. Apart from securing the relative positions of the elements of the solenoid unit, like the magnetic coil and the solenoid housing, the solenoid portion provides electric insulation for the magnetic coil.

Furthermore, the plastic body comprises a cable portion that extends proximally (i.e. in a proximal direction with respect to the injector axis, but not necessarily parallel to the injector axis) with respect to the solenoid portion. Normally, it is directly connected to the solenoid portion. It is molded over the cable element, so that the cable element is enclosed in the plastic material. If the cable element comprises several conductors that have no dedicated insulation, it is understood that the plastic material is molded so that each conductor is covered individually to provide an insulation between the conductors. Apart from insulating the cable element (or its individual conductors), the cable portion also mechanically stabilizes the cable element and protects the cable element from mechanical damage.

Also, the plastic body comprises a holder portion, which may also be referred to as a retainer portion. This holder portion is disposed proximally from the solenoid unit and normally also from the solenoid portion, i.e. with respect to the axial direction defined by the injector axis, it is closer to the proximal side. The holder portion circumferentially surrounds a proximal aperture around the injector axis. The proximal aperture, which may also be referred to as a proximal through-hole, traverses the holder portion in the axial direction. Correspondingly, the holder portion circumferentially surrounds the proximal aperture and forms a boundary of this aperture in the radial direction. As a whole, the holder portion has a closed structure along the tangential direction. Since the plastic body has a coherent structure, the solenoid portion, the cable portion and the holder portion are at least indirectly connected with each other.

The parts of the fuel injector mentioned up to this point, i.e. the solenoid unit, the cable element and the plastic body are parts of a solenoid assembly of the fuel injector. The solenoid assembly is bonded together by the molded plastic body, wherefore it cannot be disassembled without destroying the plastic body.

Furthermore, the fuel injector comprises an axially extending injector body, which is adapted for guiding fuel from the proximal side to a nozzle at the distal side, which injector body is received in the distal aperture and the proximal aperture. The injector body may comprise several components along the axial direction, which are connected in a fluid tight manner to prevent any fuel leakage. In general, the injector body, which may in particular be symmetric with respect to the injector axis, is adapted to receive fuel via a corresponding port at the proximal side, to guide the fuel (through at least one internal channel) to the distal side, where a nozzle is disposed. Furthermore, the fuel can be discharged in a controlled manner through the nozzle. Fuel discharge is normally controlled by a pintle having an axially extending pintle shaft and being axially movable between an open position and a closed position. In some embodiments, a ball is fixed to a distal side of the pintle and the ball engages a nozzle seat at the distal side of the housing, thereby closing the nozzle. While the movement of the pintle is initiated by changes in the magnetic field created by the magnetic coil, the magnetic field normally does not actuate the pintle directly. Rather, the injector body normally comprises an armature that is axially movable between a proximal position and a distal position. For instance, the armature is moved to the proximal position by the magnetic field, while it is moved to the distal position by spring force, wherein at least one movement could be assisted by fuel pressure and/or gravity. Normally, both the pintle and the armature are biased by dedicated springs towards one position, e.g. corresponding to a closed position.

As a rule, the injector body further comprises a pole piece disposed proximally of the armature. The pole piece is made of ferromagnetic material. The function of the pole piece is to be magnetised when the magnetic coil generates a magnetic field (and e.g. to attract the distally disposed armature). As compared to the absence of a pole piece, the magnetic field is shaped and/or enhanced. It is understood that there may be more than one pole piece, or the pole piece may consist of several parts. The pole piece may be disposed circumferentially around the injector axis and may have an annular shape. The axial position of the pole piece can at least partially correspond to the axial position of the magnetic coil.

The injector body is received in the distal aperture and the proximal aperture. In other words, it passes through or traverses these apertures so that it is surrounded by the holder portion of the plastic body and the solenoid unit, respectively. While the way of connecting the injector body to the solenoid assembly is not limited, the injector body may at least partially be retained by friction in at least one aperture, in particular in the proximal aperture. It could even be press-fitted into at least one aperture.

According to the invention, the holder portion comprises two semi-annular arch portions, which are axially offset and are disposed on opposite sides of an axial body plane with respect to each other and are connected at least adjacent the body plane by two axially extending connecting portions on opposite sides of the proximal aperture. Each arch portion is semi-annular, which in this context is not to be construed as referring to an exact semi-circle of 180°, but rather to the overall shape. Since the holder portion surrounds the proximal aperture as described above, each arch portion, with respect to the injector axis, has an inner dimension (normally an inner radius) and an outer dimension (normally an outer radius). The arch portions can be disposed concentric with respect to the injector axis. They are axially offset with respect to each other, i.e. their positions with respect to the axial direction, as defined by the injector axis, do not overlap. Insofar, one of the arch portions can be referred to as a "proximal arch portion" and the other as a "distal arch portion". One of the arch portions is disposed on one side of a body plane and the other arch portion is disposed on the other side of the body plane. The body plane is an axial plane, which means that the injector axis runs through the body plane (i.e. the body plane comprises the injector axis).

Due to the semi-annular shape and due to their non-overlapping positions with respect to the axial direction, each arch portion represents a shape without any undercut, i.e. in a molding process, it can be molded between two mold halves of a mold that are movable perpendicular to the body plane. It is understood that any undercut would prevent separation of the mold halves or the plastic body once the holder portion has been formed. The absence of such undercut greatly facilitates the molding operation. In order to provide a circumferentially closed structure around the proximal aperture, the arch portions are connected at least adjacent the body plane by axially extending connecting portions. These connecting portions are disposed on opposite sides of the proximal aperture, namely in those regions where the arch portions are closest to each other. Normally, each connecting portion extends to both sides of the body plane. In order to facilitate the molding process, it may be delimited by surfaces that are perpendicular to the body plane. With respect to the radial direction, the inner dimensions of the respective connecting portion are normally defined by the intended dimensions of the proximal aperture, while the outer dimensions are normally similar to those of the arch portions. In some embodiments, the connecting portions may not be clearly distinguishable from the arch portions and may at least partially be a part of the arch portions.

The inventive design of the holder portion with two externally offset arch portions greatly facilitates the molding process of the plastic body. As opposed to a design with a simple annular or cylindrical holder portion, the holder portion can be molded without the need for a dedicated core in the molding apparatus that defines the proximal aperture. With a circular design, such a core would have to be moved into position parallel to the injector axis before the molding process starts and again would have to be retracted parallel to the injector axis when the plastic body has been molded. According to the invention, such a core can be eliminated, which greatly simplifies the layout of the molding tool and reduces the overall production costs. Also, the design with two offset semi-annular arch portions and two connecting portions usually allows for a reliable connection between the holder portion and the injector body with less plastic material than is needed for a cylindrical holder portion. This, again, reduces the production costs and also reduces the weight of the fuel injector.

It is within the scope of the invention that the arch portions are axially spaced from each other. In such a configuration, there would be a space along the axial direction, which is bridged by the axially extending connecting portions. According to another embodiment, the arch portions are disposed axially next to each other. In other words, the distal edge of one arch portion is in the same position as the proximal edge of the other arch portion. For a given axial dimension of the individual arch portion, this design allows for the minimum axial dimension of the holder portion and also for the minimum length of the connecting portions, thus reducing the amount of plastic material needed.

According to a common design, both arch portions are similar in size. In particular, an axial dimension of the first arch portion may differ by less than 10% from an axial dimension (or axial thickness) of the second arch portion or may even be identical. On the other hand, in some embodiments, the axial direction is of the arch portions may differ considerably.

In one embodiment, the holder portion is connected to the cable portion by one connecting portion. This includes the possibility that the connecting portion is partially integrated into the cable portion, i.e. that it is not clearly discernible the cable portion. It is also possible that the respective connecting portion branches from the cable portion or belongs to a branch portion that branches from the cable portion.

In contrast to fuel injectors known in the art, where the injector body is received in an annular or cylindrical sleeve of a plastic body that extends over a considerable part of the length of the injector body, the holder portion of the inventive fuel injector can be relatively short. According to one embodiment, an axial dimension of the holder portion corresponds to less than 20% of an axial distance between the holder portion and the solenoid unit. Of course, the axial dimension of the holder portion is the sum of the axial dimensions of the two arch portions (plus, optionally, an axial distance between the arch portions). In this embodiment, the injector body is received in the proximal aperture along the axial dimension of the holder portion and in the distal aperture, while in between, a portion of the injector body having at least five times the axial dimension of the holder portion is not received in either aperture of the solenoid assembly. It is understood that this embodiment significantly reduces the amount of plastic material needed. In other cases where support over a longer axial distance is required, the axial dimension of the holder portion may correspond to up to 50% or up to 80% of the axial distance between the holder portion and the solenoid unit.

According to another embodiment, which may be combined with the above-mentioned embodiment, an axial dimension of at least one arch portion corresponds to less than 20% of an axial distance between this arch portion and the solenoid unit. If both arch portions have identical axial dimensions, the above-mentioned embodiment coincides with this embodiment. However, the axial dimensions of the arch portions may differ, even considerably so.

According to one such embodiment, one arch portion extends distally up to the solenoid unit. It will be apparent that this is the distal arch portion. The proximal arch portion, on the other hand, may be rather short along the injector axis, e.g. may have an axial dimension as in the previously mentioned embodiment. In other words, while the proximal arch portion only provides a support for the injector body over a relatively small distance, the distal arch portion extends all the way up to the solenoid unit, where it may be directly connected with the solenoid portion. While the needed amount of plastic material is greater than in other embodiments, the long arch portion helps to mechanically stabilize the plastic body and therefore the fuel injector as a whole. Optionally, the distal arch portion may be in contact with the cable portion along its entire length.

As mentioned above, at least some embodiments of the inventive fuel injector lead to a significantly reduced amount of plastic material. According to one such embodiment, there is a first region between the holder portion and the solenoid unit in which the plastic body extends over less than 90° along a tangential direction around the injector axis. This is of course in contrast to a cylindrical layout as known in the art, where the plastic body extends over 360° around the injector axis. Normally, this first region belongs to the cable portion. It may extend over at least 70% of the distance between the holder portion and the solenoid unit, possibly over at least 90% or even 100% of this distance.

As mentioned above, the holder portion can be formed without the use of a dedicated core or slider, which according to prior art leads to an inner radius of the plastic body that is larger than the outer radius of the injector body. Accordingly, the inner dimensions of the holder portion can be adapted precisely to the outer dimensions of the injector body. Consequently, it is preferred that that the injector body form-fittingly engages the holder portion. In other words, the injector body is in direct contact with the holder portion so that the relative position of the injector body with respect to the solenoid assembly is defined by this contact. It would be conceivable to design the inner dimensions of the holder portion somewhat smaller than the outer dimensions of the injector body so that the injector body is press fitted into the holder portion, thereby increasing the effectiveness of the connection by enhanced friction.

Normally, any rotation of the injector body relative to the solenoid assembly should be prevented. This can be done by establishing a tangential form fit (i.e. a positive locking with respect to the tangential direction) between the injector body and the solenoid assembly. A preferred embodiment provides that the injector body comprises a locking portion having a varying radial dimension along its circumference, which locking portion engages the holder portion. Since the radial dimension changes along its circumference, a positive locking with a corresponding surface of the holder portion can be achieved, provided that the respective surface of the holder portion also has a varying radial dimension. Additionally or alternatively, the varying radial dimension may lead to an increased pressure exerted by those parts of the locking portion that protrude in the axial direction, which leads to an increased friction with respect to the holder portion.

Preferably, the locking portion engages both arch portions. I.e., the locking portion is in a position where it overlaps with both arch portions and possibly covers the entire axial dimension of the holder portion. This helps to increase the retaining effect of the locking portion and also helps to reduce the stress on the individual arch portion.

According to one embodiment, the locking portion comprises a knurl. This knurl may comprise a plurality of actually disposed grooves and ridges. As mentioned above, the grooves lead to an increased pressure on the surface of the holder portion which may even lead to an elastic or plastic deformation, like the grooves cutting into the surface of the holder portion.

In order to provide for an advantageous distribution of the magnetic field inside the fuel injector, the solenoid unit can comprise a flux washer that is disposed adjacent a proximal side of the solenoid housing and extends radially inwards with respect to the solenoid housing. The flux washer is made of a ferromagnetic material, e.g. an iron alloy. An inner part of the flux washer may be relatively close to the above-mentioned pole piece so that the flux washer can be regarded as a "bridge" for the magnetic flux between the pole piece and the solenoid housing. Since the flux washer is part of the solenoid unit, which comprises the distal aperture, it also has a central aperture around the injector axis. Furthermore, the flux washer is usually not fully circular, but comprises a recess through which the cable element is passed.

A preferred embodiment provides that the flux washer is welded to a proximal end of the solenoid housing. In this embodiment, the flux washer forms a radially inward facing flange at the proximal end of the solenoid housing. Of course, this embodiment is advantageous with regards to the transmission of the magnetic flux between the flux washer and the solenoid housing. Also, during the molding process, plastic material cannot inadvertently flow through a gap between the flux washer and the solenoid housing, since this gap is closed by the welded connection.

In one embodiment, the cable portion comprises a collar formed around a contact portion of the cable element. This collar protects an inner cavity in which the contact portion of the cable element is located, thereby protecting this contact portion from any unwanted electrical contact. One could also say that the contact portion and the collar form a socket. Electrical contact with the contact portion can only be established by inserting a corresponding plug into the socket. During the molding process, the collar with the inner cavity can only be realized by providing a movable core that prevents plastic material from flowing into the inner cavity. After the plastic body has been formed, the movable core has to be retracted from the inner cavity in order to remove the solenoid assembly from the molding tool.

The invention also provides a method for manufacturing a fuel injector extending along an injector axis from a proximal side and a distal side. Features of the method which have already been explained above with respect to the inventive fuel injector will not be explained again.

The method comprises enclosing a solenoid unit, comprising a magnetic coil in a solenoid housing and circumferentially surrounding a distal aperture around the injector axis, and a cable element connected to the magnetic coil, between a first mold half and a second mold half of a molding tool, which mold halves are movable perpendicular to a separation plane. The molding tool (or mold) is adapted for injection molding of a plastic material. It comprises two molding halves which movable with respect to each other perpendicular to a separation plane. To some extent, the separation plane corresponds to or is parallel to contact surfaces of the molding halves. The molding halves partially define a mold cavity in which the solenoid housing and the cable element are positioned.

In another step, which may be performed before the mode halves are closed or after that, a first core it is moved proximally into the distal aperture. The first core, which may also be referred to as a first slider, normally has radial dimensions that correspond to those of the distal aperture so that it is sealingly engages the solenoid unit from the inside. If the solenoid unit comprises a flux washer, the first core is normally inserted proximally at least up to a position of the flux washer.

In another step, which may also be performed before the mold halves are closed or after that, a second core (or slider) is positioned near a contact portion of the cable element. The contact portion, as has been explained above, corresponds to that part of the cable element that is adapted for electrical contact with an external element like a connector cable. The second core may be shaped enclose the contact portion of the cable element to at least partially, in order to keep plastic material away from the contact portion. While the first core is positioned on the injector axis, the position of the second core is an off-axis position. Also, while the first core is moved axially, the second core is normally moved at an angle with respect to the injector axis.

After the above-mentioned steps have been performed, a plastic material is injected into a mold cavity defined by the first mold half, the second mold half, the first core and the second core to form a coherent plastic body, which comprises a solenoid portion molded onto the solenoid unit, a cable portion extending proximal from the solenoid portion and molded over the cable element, and a holder portion that is disposed proximal from the solenoid unit and that circumferentially surrounds a proximal aperture around the injector axis, whereby an injector assembly is formed.

In another step (when the plastic material has been solidified), the first and second core are withdrawn and the mold halves are opened to remove the injector assembly. The first and second core are withdrawn or retracted, wherein the direction of movement normally corresponds to the movement before the injection of the plastic material. It is understood that each of the cores can be withdrawn before or after the mode halves been opened. After both cores have been withdrawn and the boathouse have been opened (i.e. one mold half has been removed from the other), the injector assembly is removed from the mold, i.e. taking out of the mold.

In yet another step, an injector body is inserted so that it is received in the distal aperture and the proximal aperture.

According to the invention, the holder portion comprises two semi-annular arch portions, which are axially offset and are disposed on opposite sides of an axial body plane with respect to each other and are connected at least adjacent the body plane by two axially extending connecting portions on opposite sides of the proximal aperture. In the closed position of the molding tool, the separation plane normally corresponds to the body plane of the plastic body.

It will be understood that without the step of inserting the injector body, the inventive method for producing a fuel injector corresponds to a method of producing a solenoid assembly.

### BRIEF DESCRIPTION OF THE DRAWINGS

Preferred embodiments of the invention will now be described, by way of example, with reference to the accompanying drawings, in which:
- Fig.1: is a first side view of a fuel injector according to prior art;
- Fig.2: is a second side view of the fuel injector from fig. 1;
- Fig.3: is a cross-sectional view along the line III-III in fig. 2;
- Fig.3A: is a detail view of fig.3;
- Fig.4: is a top view of a solenoid assembly of the fuel injector from fig.1;
- Fig.5: is a perspective view of the solenoid assembly from fig.4;
- Fig.6: is a first side view of a first embodiment of an inventive fuel injector;
- Fig.7: is a second side view of the fuel injector from fig.6;
- Fig.8: is a cross-sectional view along the line VIII-VIII in fig.7;
- Fig.8A: is a detail view of fig.8;
- Fig.9: is a first side view of a solenoid assembly of the fuel injector from fig.6;
- Fig.10: is a second side view of the solenoid assembly from fig.9;
- Fig.11: is a perspective view of the solenoid assembly from fig.9;
- Fig.12: is a cross-sectional view along the line XII-XII in fig. 9;
- Fig.13: is a top view of the solenoid assembly from fig.9;
- Fig.14: is a first side view of a second embodiment of an inventive fuel injector;
- Fig.15: is a second side view of the fuel injector from fig.14;
- Fig.16: is a cross-sectional view along the line XVI-XVI in fig.15;
- Fig.17: is a first perspective view of a solenoid assembly of the fuel injector from fig.14; and
- Fig.18: is a second perspective view of the solenoid assembly from fig.17.

### DESCRIPTION OF PREFERRED EMBODIMENTS

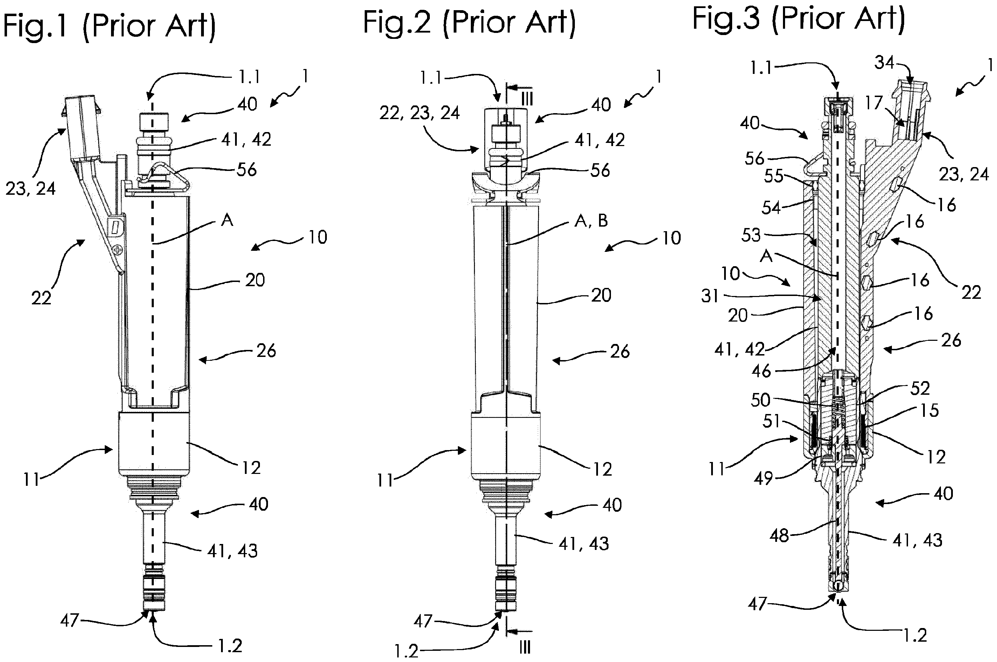

Figs.1 - 5 show a fuel injector 1 according to prior art, which can be used in a combustion engine. The fuel injector 1 extends along an injector axis A from a proximal side 1.1 to a distal side 1.2. In assembled state, the distal side 1.2 faces the combustion engine and is inserted therein. As main components, the fuel injector 1 comprises a solenoid assembly 10 and an injector body 40. The injector body 40 comprises an injector housing 41 made of metal. Strictly speaking, the injector housing comprises two connected parts, namely a proximal housing 42 and a distal housing 43. The injector housing 41 extends to the distal side 1.2, where a nozzle 47 is disposed. A fuel channel is formed inside the housing 1, which extends up to the nozzle 47 and is adapted for guiding fuel through the injector body 40.

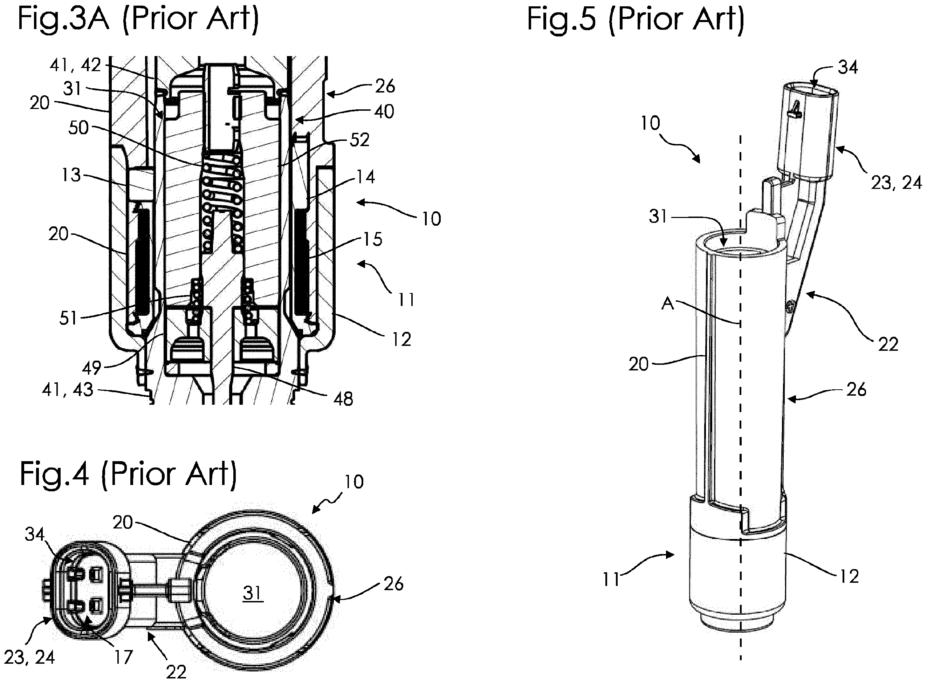

The nozzle 47 can be closed by a pintle 48 that is disposed within the injector housing 41. The pintle 48 is axially movable between an open position (not shown) and a closed position, which is represented by figs. 3 and 3A. In the closed position, a ball at a distal side of the pintle 48 rests against a nozzle seat, whereby the nozzle 47 is closed. If the pintle 48 moves proximally towards the open position, the ball is lifted away from the nozzle seat, whereby the nozzle 47 is opened. A first spring 50 is interposed between the housing and the pintle 48. It is a coil spring that is aligned along the injector axis A and exerts a force to distally bias the pintle 48, i.e. to bias the pintle 48 in a distal direction. The injector housing further comprises an armature 49 that has a roughly annular shape and surrounds the pintle 48. The armature 49 is axially movable in the injector housing 41 between a proximal position and a distal position. It is biased by a second spring 51 towards the distal position. The armature 49 is moveable in the proximal direction by means of a magnetic field generated by the solenoid unit 11. In the proximal position, a proximal side of the armature 49 rests against a pole piece 52. At the same time, the armature 49 engages the pintle 48 to move the pintle 48 against the force of the first spring 50 into the open position. The pole piece 52 is circumferentially disposed around the injector axis A, thereby surrounding the first spring 50 as well as a proximal portion of the pintle 48.

The solenoid assembly 10 comprises a solenoid unit 11 which is located axially in a similar position as the pole piece 52 and the armature 49 of the injector body. It comprises a roughly cylindrical solenoid housing 12 that circumferentially surrounds a magnetic coil 15 and is concentrically disposed with respect to the magnetic coil 15. The coil 15 itself is wound about a roughly cylindrical bobbin 14. If a current flows through the magnetic coil 15, a magnetic field is generated. The details of the propagation of the magnetic field in the fuel injector 1 are not relevant for the present invention and therefore will not be discussed in detail. It should be noted, though, that a magnetizable flux washer 13 is disposed inside the solenoid housing 12. It has a disc-like, roughly annular shape with a recess that allows for passage of a cable element 16 that is connected to the magnetic coil 15. An inner radius of the flux washer 13 is basically equal to an inner radius of the bobbin 14.

A plastic body 20 of the solenoid assembly 10 is molded onto the solenoid unit 11. In particular, a part of the plastic body 20 is disposed inside the solenoid housing and encapsulates the magnetic coil 15 as well as the cable element 16. The plastic body 20 extends further proximally from the solenoid unit 11 and forms a cylindrical holder portion 26, in which a major part of the injector body 10 is received. Another portion of the injector body 40 is received inside the solenoid unit and rests against the flux washer 13, the bobbin 14 and a distal part of the solenoid housing 12, respectively. A central aperture 31 traverses the holder portion 26 and the solenoid unit 11 along the injector axis A. The plastic body 20 also comprises a cable portion 22 that is partially integrated into the holder portion 26 and extends - at an oblique angle with respect to the injector axis A - to a collar 23 formed about a cavity 34 and a contact portion 17 of the cable element 16. The contact portion 17 and the collar 23 are part of a socket 24 to which a plug of a connector cable (not shown) can be connected.

In the production process of the fuel injector 1, the solenoid assembly 10, which is shown separately in figs. 4 and 5, is produced as a separate part, before the injector body 40 is inserted into the axially extending aperture 31 of the solenoid assembly 10. The plastic body 20 is made by over molding the preassembled solenoid unit 11 and the cable element 16. During the injection molding process, the partition plane between two mold halves of the molding tool corresponds to the sectional plane in fig. 2. While some parts of the shape of the plastic body 20 can be defined by the molding halves, the central aperture 31 as well as the cavity 34 inside the collar 23 need to be defined by movable cores or sliders. One core is needed to define the cavity 34 inside the collar, while two additional cores are necessary to prevent plastic material from entering the space for the aperture 31. A first core is moved forward proximally from the distal side 1.2 into the solenoid housing 12 until its proximal end is flush with the proximal end of the flux washer 13. Another core is moved forward distally from the proximal side 1.1 into the space that corresponds to the aperture 31 until its distal end rests against the flux washer 13. Thereby, the second core sealingly engages the flux washer 13 and prevents any leakage of plastic material. In order to provide this sealing effect, however, the second core needs to have a radius that is greater than the inner radius of the flux washer 13. Correspondingly, the inner radius of the aperture 31 is larger than the outer radius of the injector body 40. A gap 53 remains, as can be seen in fig. 3, and the injector body 40 is not form-fittingly received inside the aperture 31. Therefore, a support ring 54 and a seal ring 55 need to be interposed between the holder portion 26 and the injector body 40. A spring clip 56 is secured to the proximal housing 43 to prevent axial movement of the injector body 40 with respect to the solenoid assembly 10.

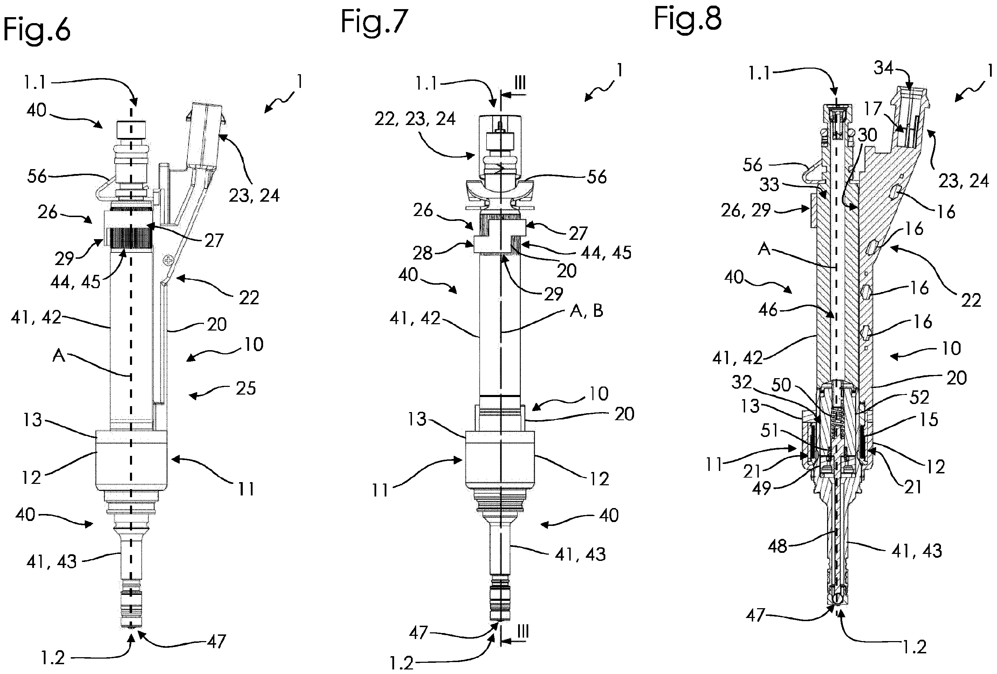

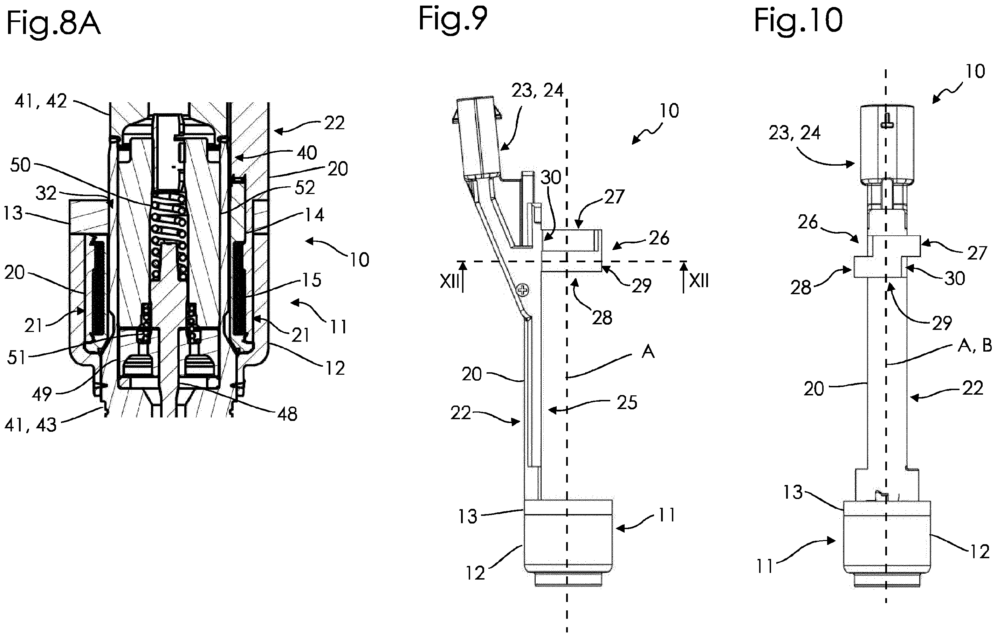

Figs. 6 - 13 show a first embodiment of an inventive fuel injector 1 that also comprises a solenoid assembly 10 and an injector body 40. The injector body 40 is largely identical to the one shown in figs. 1 - 3A and will therefore not be discussed again. The solenoid assembly 10 comprises a solenoid unit 11 that is largely identical to the one described above. However, in this embodiment, the flux washer 13 is disposed at a proximal end of the solenoid housing 12 and connected thereto by welding. Effectively, the flux washer 13 forms a radially inwards facing flange on the solenoid housing 12. The plastic body 20 of the solenoid assembly comprises three interconnected portions, namely a solenoid portion 21 that is molded onto the solenoid unit 11, similar to the prior art example described above. A cable portion 22 extends proximally from the solenoid portion 21 and encapsulates the cable element 16. At a distance from the solenoid unit 11 and the solenoid portion 21, a holder portion 26 is connected to the cable portion 22. The holder portion 26 circumferentially surrounds and defines a proximal aperture 33 with a radius that corresponds to the radius of the injector body 40.

The structure of the holder portion 26 is defined by two semi-annular arch portions 27, 28 and two connecting portions 29, 30. With reference to a body plane B (see fig. 7) that contains the injector axis A, the arch portions 27, 28 are disposed on opposite sides of the body plane B. Also, they are axially offset with respect to each other or, more specifically, they are axially disposed next to each other. Accordingly, they can be referred to as a proximal arch portion 27 and a distal arch portion 28, respectively. In a region near the body plane B, the arch portions 27, 28 are connected by a first connecting portion 29 and a second connecting portion 30, the latter being directly connected or integrated into the cable portion 22. In this embodiment, a total axial dimension of the holder portion 26 corresponds approximately 18% of the axial distance between the holder portion 26 and the solenoid unit 11. However, this ratio could be larger or possibly even smaller without jeopardizing the stability of the plastic body 20 and the fuel injector 1 as a whole. The axial dimensions of the two arch portions 27, 28 are identical, but this could also be changed to some extent.

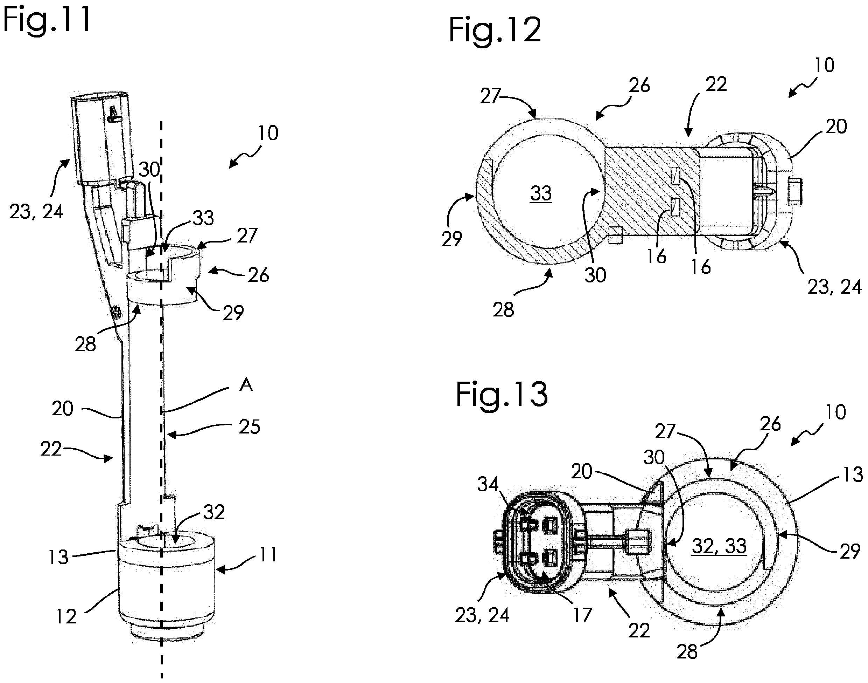

The holder portion 26 only surrounds a minor part of the total length of the injector body 40 (or more specifically, of the proximal housing 42), wherefore the amount of plastic material needed for the plastic body 20 is greatly reduced with respect to prior art as represented by figs. 1 - 5. More importantly, the holder portion 26 has no undercut regions with respect to a direction perpendicular to the body plane B, as can best be seen in the sectional view of fig. 12. Accordingly, in the molding process, there is no need for a dedicated core or slider to define the proximal aperture 33 in the holder portion 26. Rather, the holder portion 26 can be defined entirely by two mold halves of the molding tool. On the one hand, this greatly simplifies the molding process. On the other hand, since a sealing contact with the proximal edge of the flux washer 13 can be established by the two mold halves without a slider, the inner radius of the proximal aperture 33 can be freely adapted for an optimal form fit with the injector body 40. Accordingly, the injector body 40 form-fittingly engages both arch portions 27, 28 of the holder portion 26. In order to avoid any rotation of the injector body 40 relative to the solenoid assembly 10, the injector housing 41 comprises a locking portion 44 with a knurl 45. This knurl 45 engages the holder portion 26 and comprises a plurality of axial ridges and grooves, wherein the ridges may even elastically or plastically deform the inner surface of the holder portion 26, thereby "cutting" into the inner surface. This greatly enhances the form fit between the holder portion 26 and the injector body 40. Even if there is no deformation of the holder portion 26 by the knurl 45, the knurl 45 helps to significantly increase friction in the tangential direction.

Since the holder portion 26 only extends over a relatively small region along the injector axis A, there is a first region 25 extending over the entire interval between the holder portion 26 and the solenoid unit 11, in which the plastic body 20 (or more specifically, the cable portion 22) extends over less than 90° along the tangential direction. This also demonstrates the reduction in plastic material needed with respect to prior art.

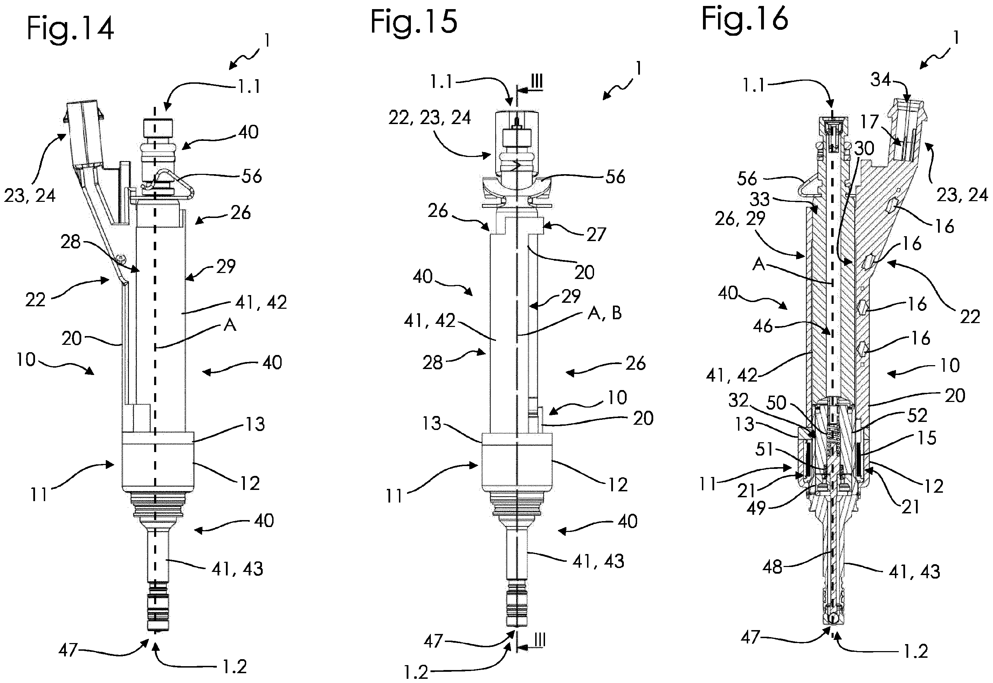

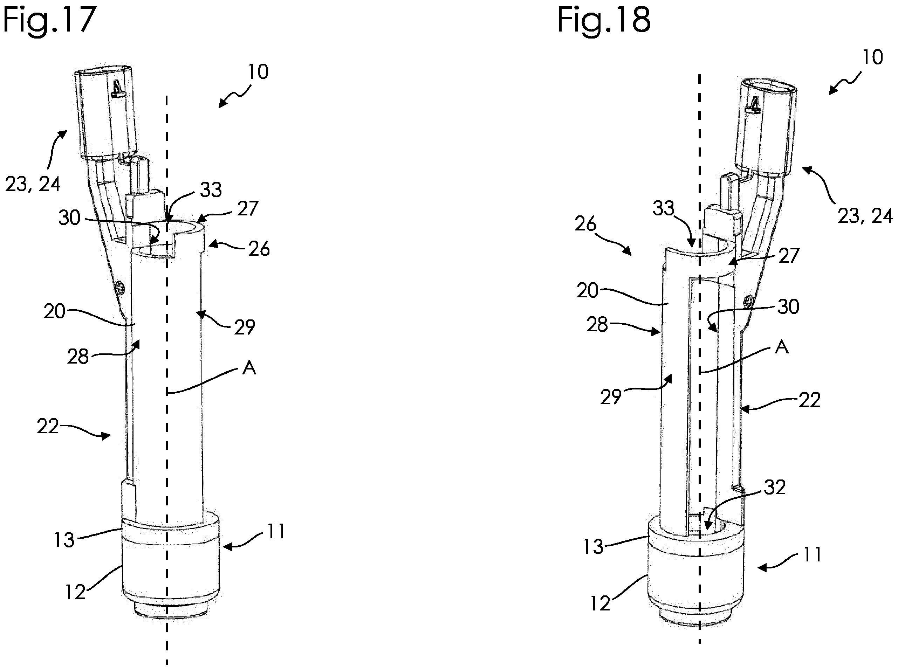

Figs. 14 - 18 show a second embodiment of an inventive fuel injector 1, which is largely identical to the first embodiment and will insofar not be explained again. While the dimensions and position of the proximal arch portion 27 are identical to the first embodiment, the distal arch portion 28 extends up to the solenoid unit 11, where it is directly connected to the solenoid portion 21. Also, it is connected to the cable portion 22 along its entire axial length. Both connecting portions 29, 30 also extend up to the solenoid unit 11. Apparently, this design greatly increases the torsional stiffness of the plastic body 20 since the shape of the holder portion 26 largely corresponds to a half-cylinder. While the amount of plastic material is increased with respect to the first embodiment, it is still significantly less than in the prior-art example shown in fig. 1 - 5. Since the cross-sections of the arch portions 27, 28 in this embodiment are identical to the first embodiment, the plastic body 20 of the solenoid assembly 10 can also be molded without the need for a dedicated core that defines the proximal aperture 33. Accordingly, the advantages described with respect to the first embodiment also apply to this embodiment.

### Legend of Reference Numbers:

- 1: fuel injector
- 1.1: proximal side
- 1.2: distal side
- 10: solenoid assembly
- 11: solenoid unit
- 12: solenoid housing
- 13: flux washer
- 14: bobbin
- 15: magnetic coil
- 16: cable element
- 17: contact portion
- 20: plastic body
- 21: solenoid portion
- 22: cable portion
- 23: collar
- 24: socket
- 25: first region
- 26: holder portion
- 27, 28: arch portion
- 29, 30: connecting portion
- 31, 32, 33: aperture
- 34: cavity
- 40: injector body
- 41: injector housing
- 42: proximal housing
- 43: distal housing
- 44: locking portion
- 45: knurl
- 46: cavity
- 47: nozzle
- 48: pintle
- 49: armature
- 50, 51: spring
- 52: pole piece
- 53: gap
- 54: support ring
- 55: seal ring
- 56: spring clip
- A: injector axis
- B: body plane

## Claims

1. A fuel injector (1) extending along an injector axis (A) from a proximal side (1.1) and a distal side (1.2), comprising:
- a solenoid unit (11) comprising a magnetic coil (15) in a solenoid housing (12), the solenoid unit (11) circumferentially surrounding a distal aperture (32) around the injector axis (A);
- a cable element (16) connected to the magnetic coil (15);
- a coherent plastic body (20), which comprises a solenoid portion (21) molded onto the solenoid unit (11), a cable portion (22) extending proximal from the solenoid portion (21) and molded over the cable element (16), and a holder portion (26) that is disposed proximal from the solenoid unit (11) and that circumferentially surrounds a proximal aperture (33) around the injector axis (A); and
- an axially extending injector body (40), which is adapted for guiding fuel from the proximal side (1.1) to a nozzle (45) at the distal side (1.2), which injector body (40) is received in the proximal (33) and distal (32) aperture,
wherein the holder portion (26) comprises two semi-annular arch portions (27, 28), which are axially offset and are disposed on opposite sides of an axial body plane (B) with respect to each other and are connected at least adjacent the body plane (B) by two axially extending connecting portions (29, 30) on opposite sides of the proximal aperture (33).

2. The fuel injector according to any claim 1, wherein the arch portions (27, 28) are disposed axially next to each other.

3. The fuel injector according to any of the preceding claims, wherein the holder portion (26) is connected to the cable portion (22) by one connecting portion (29, 30).

4. The fuel injector according to any of the preceding claims, wherein an axial dimension of the holder portion (26) corresponds to less than 20% of an axial distance between the holder portion (26) and the solenoid unit (11).

5. The fuel injector according to any of the preceding claims, wherein an axial dimension of at least one arch portion (27, 28) corresponds to less than 20% of an axial distance between this arch portion (27, 28) and the solenoid unit (11).

6. The fuel injector according to any of the preceding claims, wherein one arch portion (27, 28) extends distally up to the solenoid unit (11).

7. The fuel injector according to any of the preceding claims, wherein in a first region (25) between the holder portion (26) and the solenoid unit (11), the plastic body (20) extends over less than 90° along a tangential direction around the injector axis (A).

8. The fuel injector according to any of the preceding claims, wherein the injector body (40) form-fittingly engages the holder portion (26).

9. The fuel injector according to any of the preceding claims, wherein the injector body (40) comprises a locking portion (44) having a varying radial dimension along its circumference, which locking portion (44) engages the holder portion (26).

10. The fuel injector according to any of the preceding claims, wherein the locking portion (44) engages both arch portions (27, 28).

11. The fuel injector according to any of the preceding claims, wherein the solenoid unit (11) comprises a flux washer (13) that is disposed adjacent a proximal side of the solenoid housing (12) and extends radially inwards with respect to the solenoid housing (12).

12. The fuel injector according to any of the preceding claims, wherein the flux washer (13) is welded to the proximal side of the solenoid housing (12).

13. The fuel injector according to any of the preceding claims, wherein the cable portion (22) comprises a collar (23) formed around a contact portion (17) of the cable element (16).

14. A method for manufacturing a fuel injector (1) extending along an injector axis (A) from a proximal side (1.1) and a distal side (1.2), the method comprising:
- enclosing a solenoid unit (11), comprising a magnetic coil (15) in a solenoid housing (12) and circumferentially surrounding a distal aperture (32) around the injector axis (A), and a cable element (16) connected to the magnetic coil (15) between a first mold half and a second mold half of a molding tool, which mold halves are movable perpendicular to a separation plane;
- moving a first core proximally into the distal aperture (32);
- positioning a second core near a contact portion (17) of the cable element (16);
- injecting a plastic material into a mold cavity defined by the first mold half, the second mold half, the first core and the second core to form a coherent plastic body (20), which comprises a solenoid portion (21) molded onto the solenoid unit (11), a cable portion (22) extending proximal from the solenoid portion (21) and molded over the cable element (16), and a holder portion (26) that is disposed proximal from the solenoid unit (11) and that circumferentially surrounds a proximal aperture (33) around the injector axis (A), whereby an injector assembly (10) is formed;
- withdrawing the first and second core and opening the mold halves to remove the injector assembly (10); and
- inserting an injector body (40) so that it is received in the first (42) and second (43) aperture,
wherein the holder portion (26) comprises two semi-annular arch portions (27, 28), which are axially offset and are disposed on opposite sides of an axial body plane (B) with respect to each other and are connected at least adjacent the body plane (B) by two axially extending connecting portions (29, 30) on opposite sides of the proximal aperture (33).

## Patentansprüche

1. Kraftstoffeinspritzventil (1), das sich entlang einer Einspritzventilachse (A) von einer proximalen Seite (1.1) und einer distalen Seite (1.2) erstreckt, umfassend:
- eine Solenoideinheit (11), umfassend eine Magnetspule (15) in einem Solenoidgehäuse (12), wobei die Solenoideinheit (11) eine distale Öffnung (32) um die Einspritzventilachse (A) umfänglich umgibt;
- ein Kabelelement (16), das mit der Magnetspule (15) verbunden ist;
- einen zusammenhängenden Kunststoffkörper (20), der einen Solenoidabschnitt (21), der auf die Solenoideinheit (11) geformt ist, einen Kabelabschnitt (22), der sich proximal von dem Solenoidabschnitt (21) erstreckt und über das Kabelelement (16) geformt ist, und einen Halterungsabschnitt (26) umfasst, der proximal von der Solenoideinheit (11) angeordnet ist und der eine proximale Öffnung (33) um die Einspritzventilöffnung (A) umfänglich umgibt; und
- einen sich axial erstreckenden Einspritzventilkörper (40), der dazu geeignet ist, Kraftstoff von der proximalen Seite (1.1) zu einer Düse (45) an der distalen Seite (1.2) zu führen, wobei der Einspritzventilkörper (40) in der proximalen (33) und der distalen (32) Öffnung aufgenommen ist,
wobei der Halterungsabschnitt (26) zwei halbringförmige Bogenabschnitte (27, 28) umfasst, die axial versetzt sind und die auf gegenüberliegenden Seiten einer axialen Körperebene (B) in Bezug zueinander angeordnet sind und zumindest angrenzend an die Körperebene (B) durch zwei sich axial erstreckende Verbindungsabschnitte (29, 30) auf gegenüberliegenden Seiten der proximalen Öffnung (33) miteinander verbunden sind.

2. Kraftstoffeinspritzventil nach Anspruch 1, wobei die Bogenabschnitte (27, 28) axial nebeneinander angeordnet sind.

3. Kraftstoffeinspritzventil nach einem der vorhergehenden Ansprüche, wobei der Halterungsabschnitt (26) durch einen Verbindungsabschnitt (29, 30) mit dem Kabelabschnitt (22) verbunden ist.

4. Kraftstoffeinspritzventil nach einem der vorhergehenden Ansprüche, wobei eine axiale Abmessung des Halterungsabschnitts (26) weniger als 20 % eines axialen Abstands zwischen dem Halterungsabschnitt (26) und der Solenoideinheit (11) entspricht.

5. Kraftstoffeinspritzventil nach einem der vorhergehenden Ansprüche, wobei eine axiale Abmessung mindestens eines Bogenabschnitts (27, 28) weniger als 20 % eines axialen Abstands zwischen diesem Bogenabschnitt (27, 28) und der Solenoideinheit (11) entspricht.

6. Kraftstoffeinspritzventil nach einem der vorhergehenden Ansprüche, wobei sich ein Bogenabschnitt (27, 28) distal bis zu der Solenoideinheit (11) erstreckt.

7. Kraftstoffeinspritzventil nach einem der vorhergehenden Ansprüche, wobei sich der Kunststoffkörper (20) in einem ersten Bereich (25) zwischen dem Halterungsabschnitt (26) und der Solenoideinheit (11) über weniger als 90° entlang einer tangentialen Richtung um die Einspritzventilachse (A) erstreckt.

8. Kraftstoffeinspritzventil nach einem der vorhergehenden Ansprüche, wobei der Einspritzventilkörper (40) formschlüssig in den Halterungsabschnitt (26) eingreift.

9. Kraftstoffeinspritzventil nach einem der vorhergehenden Ansprüche, wobei der Einspritzventilkörper (40) einen Verriegelungsabschnitt (44) mit einer variierenden radialen Abmessung entlang seines Umfangs umfasst, wobei der Verriegelungsabschnitt (44) in den Halterungsabschnitt (26) eingreift.

10. Kraftstoffeinspritzventil nach einem der vorhergehenden Ansprüche, wobei der Verriegelungsabschnitt (44) in beide Bogenabschnitte (27, 28) eingreift.

11. Kraftstoffeinspritzventil nach einem der vorhergehenden Ansprüche, wobei die Solenoideinheit (11) eine Flussscheibe (13) umfasst, die angrenzend an eine proximale Seite des Solenoidgehäuses (12) angeordnet ist und sich in Bezug auf das Solenoidgehäuse (12) radial nach innen erstreckt.

12. Kraftstoffeinspritzventil nach einem der vorhergehenden Ansprüche, wobei die Flussscheibe (13) an die proximale Seite des Solenoidgehäuses (12) geschweißt ist.

13. Kraftstoffeinspritzventil nach einem der vorhergehenden Ansprüche, wobei der Kabelabschnitt (22) einen Kragen (23) umfasst, der um einen Kontaktabschnitt (17) des Kabelelements (16) gebildet ist.

14. Verfahren zum Herstellen eines Kraftstoffeinspritzventils (1), das sich entlang einer Einspritzventilachse (A) von einer proximalen Seite (1.1) und einer distalen Seite (1.2) erstreckt, wobei das Verfahren Folgendes umfasst:
- Einschließen einer Solenoideinheit (11), die eine Magnetspule (15) in einem Solenoidgehäuse (12) umfasst und umfänglich eine distale Öffnung (32) um die Einspritzventilachse (A) umgibt, und ein Kabelelement (16), das zwischen einer ersten Formhälfte und einer zweiten Formhälfte eines Formwerkzeugs mit der Magnetspule (15) verbunden ist, wobei die Formhälften senkrecht zu einer Trennebene beweglich sind;
- Bewegen eines ersten Kerns proximal in die distale Öffnung (32);
- Positionieren eines zweiten Kerns nahe einem Kontaktabschnitt (17) des Kabelelements (16);
- Einspritzen eines Kunststoffmaterials in einen Formenhohlraum, der durch die erste Formhälfte, die zweite Formhälfte, den ersten Kern und den zweiten Kern definiert ist, um einen zusammenhängenden Kunststoffkörper (20) zu bilden, der einen Solenoidabschnitt (21), der auf die Solenoideinheit (11) geformt ist, einen Kabelabschnitt (22), der sich proximal von dem Solenoidabschnitt (21) erstreckt und über das Kabelelement (16) geformt ist, und einen Halterungsabschnitt (26) umfasst, der proximal von der Solenoideinheit (11) angeordnet ist und der eine proximale Öffnung (33) um die Einspritzventilöffnung (A) umfänglich umgibt, wobei ein Einspritzventilaufbau (10) gebildet ist;
- Zurückziehen des ersten und des zweiten Kerns und Öffnen der Formhälften, um den Einspritzventilaufbau (10) zu entfernen; und
- Einfügen eines Einspritzventilkörpers (40), so dass er in der ersten (42) und der zweiten (43) Öffnung aufgenommen wird,
wobei der Halterungsabschnitt (26) zwei halbringförmige Bogenabschnitte (27, 28) umfasst, die axial versetzt sind und die auf gegenüberliegenden Seiten einer axialen Körperebene (B) in Bezug zueinander angeordnet sind und zumindest angrenzend an die Körperebene (B) durch zwei sich axial erstreckende Verbindungsabschnitte (29, 30) auf gegenüberliegenden Seiten der proximalen Öffnung (33) miteinander verbunden sind.

## Revendications

1. Injecteur de carburant (1) s'étendant le long d'un axe d'injecteur (A) à partir d'un côté proximal (1.1) et d'un côté distal (1.2), comprenant :
- une unité solénoïde (11) comprenant une bobine magnétique (15) dans un boîtier de solénoïde (12), l'unité solénoïde (11) entourant circonférentiellement une ouverture distale (32) autour de l'axe d'injecteur (A) ;
- un élément câble (16) connecté à la bobine magnétique (15) ;
- un corps en matière plastique (20) cohérent, lequel comprend une portion solénoïde (21) moulée sur l'unité solénoïde (11), une portion câble (22) s'étendant de manière proximale à partir de la portion solénoïde (21) et moulée par-dessus l'élément câble (16), et une portion support (26) qui est disposée de manière proximale par rapport à l'unité solénoïde (11) et qui entoure circonférentiellement une ouverture proximale (33) autour de l'axe d'injecteur (A) ; et
- un corps d'injecteur (40) s'étendant axialement, lequel est adapté à guider du carburant depuis le côté proximal (1.1) vers une buse (45) au niveau du côté distal (1.2), lequel corps d'injecteur (40) est reçu dans les ouvertures proximale (33) et distale (32),
dans lequel la portion support (26) comprend deux portions en arc (27, 28) semi-annulaires, lesquelles sont axialement décalées et sont disposées sur des côtés opposés d'un plan de corps (B) axial l'une par rapport à l'autre et sont raccordées au moins de manière adjacente au plan de corps (B) par deux portions de raccordement (29, 30) s'étendant axialement sur des côtés opposés de l'ouverture proximale (33).

2. Injecteur de carburant selon la revendication 1, dans lequel les portions en arc (27, 28) sont disposées axialement l'une à côté de l'autre.

3. Injecteur de carburant selon l'une quelconque des revendications précédentes, dans lequel la portion support (26) est raccordée à la portion câble (22) par une portion de raccordement (29, 30).

4. Injecteur de carburant selon l'une quelconque des revendications précédentes, dans lequel une dimension axiale de la portion support (26) correspond à moins de 20 % d'une distance axiale entre la portion support (26) et l'unité solénoïde (11).

5. Injecteur de carburant selon l'une quelconque des revendications précédentes, dans lequel une dimension axiale d'au moins une portion en arc (27, 28) correspond à moins de 20 % d'une distance axiale entre la portion en arc (27, 28) et l'unité solénoïde (11).

6. Injecteur de carburant selon l'une quelconque des revendications précédentes, dans lequel une portion en arc (27, 28) s'étend distalement jusqu'à l'unité solénoïde (11).

7. Injecteur de carburant selon l'une quelconque des revendications précédentes, dans lequel dans une première région (25) entre la portion support (26) et l'unité solénoïde (11), le corps en matière plastique (20) s'étend sur moins de 90° le long d'une direction tangentielle autour de l'axe d'injecteur (A).

8. Injecteur de carburant selon l'une quelconque des revendications précédentes, dans lequel le corps d'injecteur (40) se met en prise par liaison de forme avec la portion support (26).

9. Injecteur de carburant selon l'une quelconque des revendications précédentes, dans lequel le corps d'injecteur (40) comprend une portion de verrouillage (44) ayant une dimension radiale variant le long de sa circonférence, laquelle portion de verrouillage (44) se met en prise avec la portion support (26).

10. Injecteur de carburant selon l'une quelconque des revendications précédentes, dans lequel la portion de verrouillage (44) se met en prise avec les deux portions en arc (27, 28).

11. Injecteur de carburant selon l'une quelconque des revendications précédentes, dans lequel l'unité solénoïde (11) comprend une rondelle de flux (13) qui est disposée de manière adjacente à un côté proximal du boîtier de solénoïde (12) et s'étend radialement vers l'intérieur par rapport au boîtier de solénoïde (12).

12. Injecteur de carburant selon l'une quelconque des revendications précédentes, dans lequel la rondelle de flux (13) est soudée au côté proximal du boîtier de solénoïde (12).

13. Injecteur de carburant selon l'une quelconque des revendications précédentes, dans lequel la portion câble (22) comprend un collier (23) formé autour d'une portion de contact (17) de l'élément câble (16).

14. Procédé pour la fabrication d'un injecteur de carburant (1) s'étendant le long d'un axe d'injecteur (A) à partir d'un côté proximal (1.1) et d'un côté distal (1.2), le procédé comprenant :
- le fait d'enfermer une unité solénoïde (11), comprenant une bobine magnétique (15) dans un boîtier de solénoïde (12) et entourant circonférentiellement une ouverture distale (32) autour de l'axe d'injecteur (A), et un élément câble (16) connecté à la bobine magnétique (15) entre une première moitié de moule et une deuxième moitié de moule d'un outil de moulage, lesquelles moitiés de moule sont mobiles perpendiculairement à un plan de séparation ;
- le fait de déplacer un premier noyau de manière proximale jusque dans l'ouverture distale (32) ;
- le fait de positionner un deuxième noyau près d'une portion de contact (17) de l'élément câble (16) ;
- le fait d'injecter une matière plastique à l'intérieur d'une cavité de moule définie par la première moitié de moule, la deuxième moitié de moule, le premier noyau et le deuxième noyau afin de former un corps en matière plastique (20) cohérent, lequel comprend une portion solénoïde (21) moulée sur l'unité solénoïde (11), une portion câble (22) s'étendant de manière proximale à partir de la portion solénoïde (21) et moulée par-dessus l'élément câble (16), et une portion support (26) qui est disposée de manière proximale par rapport à l'unité solénoïde (11) et qui entoure circonférentiellement une ouverture proximale (33) autour de l'axe d'injecteur (A), grâce à quoi un ensemble injecteur (10) est formé ;
- le fait d'enlever les premier et deuxième noyaux et d'ouvrir les moitiés de moule afin de retirer l'ensemble injecteur (10) ; et
- le fait d'insérer un corps d'injecteur (40) de sorte qu'il soit reçu dans les première (42) et deuxième (43) ouvertures,
dans lequel la portion support (26) comprend deux portions en arc (27, 28) semi-annulaires, lesquelles sont axialement décalées et sont disposées sur des côtés opposés d'un plan de corps (B) axial l'une par rapport à l'autre et sont raccordées au moins de manière adjacente au plan de corps (B) par deux portions de raccordement (29, 30) s'étendant axialement sur des côtés opposés de l'ouverture proximale (33).
